# EUROPEAN PATENT SPECIFICATION

(11) **EP 2 950 067 B1**
(45) Date of publication and mention of the grant of the patent: **23.08.2017**
(21) Application number: 14169785.4
(22) Date of filing: 26.05.2014
(51) Int. Cl.: G01K 1/14, F24C 7/08

(54) **Domestic appliance comprising a food probe and a cord pullback mechanism**
Haushaltsgerät mit Nahrungssonde und Kabeleinzugsmechanismus
Appareil ménager pourvu d'une sonde pour aliments et d'un mécanisme de rappel de cordon

(43) Date of publication of application: 02.12.2015
(73) Proprietor: Electrolux Appliances Aktiebolag, 105 45 Stockholm (SE)
(72) Inventor: Böckler, Marco, 91541 Rothenburg ob der Tauber (DE); Krämer, Daniel, 91541 Rothenburg (DE); Heißwolf, Bernd, 91541 Rothenburg ob der Tauber (DE)
(74) Representative: Electrolux Group Patents

(56) References cited:
- EP-A1- 0 565 925
- EP-A2- 2 239 510
- US-A- 4 392 038
- US-A1- 2003 114 771

## Description

The present invention relates to a domestic appliance according to the preamble of claim 1.

In domestic appliances, particularly with regard to cooking appliances, probes are used comprising sensors for determining parameters such as temperature and/or humidity within the appliance. For example, it is common to use a food probe comprising a temperature sensor for determining the temperature of a foodstuff within an oven cavity.

In domestic appliances known in the art a food probe is usually connectable to the appliance via a wire for signal communication between the appliance and the probe, wherein a connector for connecting such food probe with the appliance is stored or placed either inside the appliance, for example inside the oven cavity of a baking oven, or in a frontal frame structure thereof where it is better reachable for the user.

However, if not currently in use the food probe has to be stored and according to the appliances known in the prior art ideas for storing such probe and, in particular the wire for connecting the probe with the appliance, come along with many constraints.

For example, a probe may be stored separately in a kitchen drawer having the risk of mislaying the probe, or to accidently throw down the probe causing brake, or other damage, for example from water if falling into a filled sink.

Typically, the usually relatively long wires are wound in a coil fashion when not in use. Storing the wire of such probe with or without the probe thus usually leads to knots and the wire has to be untangled, or if such wire is stored in a drawer besides knifes or scissors, the wire is damaged leading potentially to short circuit and/or damage of the sensor or probe.

The document CA 1 237 386 A1 describes a food probe holding device. However, according to this document the probe is stored in a rack separate from the oven and still prone for being mislaid or thrown down.

The document DE 10 2007 018 245 A1 describes a temperature probe for an oven not connected to said oven via a wire. Said document thus turns away from the prior art connecting a food probe to an appliance using a wire. However, also with regard to said document the constraints of a non-secure storage of the probe as such remain.

EP 0 565 925 A1 discloses a device for measuring the temperature of containers placed in a refrigerator. Said device comprises at least one temperature sensor brought into contact with the container by retention means. The temperature sensor is connected to control means via a cable. The cable is extracted from a roll-up device, so that the container can be placed at any point within the refrigerator. The roll-up device is arranged within the refrigerator.

US 4,392,038 discloses a cooking oven with a food probe. The food probe can be inserted into the food body. The food probe is connected via a cord to a jack arranged at a side wall of the oven cavity, so that the food probe with the cord may be removed therefrom.

It is an object of the present invention to provide a domestic appliance to which a probe, such as a temperature probe, is connected or connectable, comprising a secure and/or easy to handle way of storing such probe.

The above object of the invention is achieved by a domestic appliance according to claim 1.

According to the present invention the domestic appliance comprises a cord pullback mechanism, wherein the cord pullback mechanism is for winding and dispensing the cord, and wherein the cord pullback mechanism is positioned within a receiving, and wherein the receiving is provided in a frame structure of the domestic appliance, and wherein the frame structure is a frame structure surrounding an opening of the interior space of the domestic appliance.

With the domestic appliance according to the present invention, a cord connecting or capable of connecting a food probe with the domestic appliance and the food probe may be stored directly at or within the appliance. Accordingly, a place for storing such food probe and cord is assigned, which secures the food probe from being mislaid. Moreover, the domestic appliance according to the present invention provides an easy to handle way of storing such food probe and the connected cord. Advantageously, the cord is connecting the food probe with the appliance and thus, the food probe is prevented from being mislaid and, more importantly from falling accidently down. It will also be immediately understood that the constraints of the prior art according to which the cord may be tangled or knotted or damaged in a drawer upon storage are overcome in that the cord is advantageously properly stored on, by or in the cord pullback mechanism if not in use and may be dispensed therefrom/thereby if needed. Both, the food probe and the cord are thus - if not in use - stored in a safe and proper manner, at an assigned place, i.e. directly at or in the domestic appliance, being easy accessible for the user if needed.

In an advantageous embodiment of the domestic appliance according to the present invention the domestic appliance, comprises a food probe and a cord pullback mechanism, particularly a cord reel device, wherein the food probe is for determining of at least one parameter within an interior space of the domestic appliance, and wherein the food probe is connected to the domestic appliance by a cord, and wherein the cord pullback mechanism is for pulling back and/or dispensing the cord.

In an advantageous embodiment of the domestic appliance according to the present invention the food probe comprises a sensor for determining the at least one parameter, preferably within the interior space of the domestic appliance, and wherein more preferably, said sensor is a temperature and the at least one parameter is a temperature, and/or the sensor is a humidity sensor and the at least one parameter is a humidity, and/or the sensor is for detecting an electrical impedance or at least one component thereof and the at least one parameter is an electrical impedance.

In way of a non-limiting example, a food probe according to the present invention, preferably a food probe for detecting an electrical impedance, more preferably configured to be insertable into a piece of food, may comprise an elongated rod made of a non-conductive material, a front portion of the elongated rod. Preferably, said front portion is provided for invading into the piece of foodstuff. Such food probe further may comprise a first electrode made of a conductive material and arranged at said front portion of the rod, a second electrode made of a conductive material and arranged at the front portion of the rod in a predetermined distance from the first electrode, and, optionally a spike arranged at a front end and/or tip of the rod. Preferably, the first electrode and the second electrode are arranged serially along the longitudinal axis of the rod. Preferably, the food probe is connected or connectable to a power supply, particularly a voltage supply, and a control circuit, preferably of the domestic appliance according to the present invention. Preferably, a voltage can be applied between the first electrode and the second electrode, so that an electrical voltage is generated between and in the environment of the first electrode and the second electrode.

Such food probe may be used for detecting an electrical impedance or at least one component thereof as a parameter in a, preferably inner region of the piece of foodstuff. From said detected impedance or component thereof information about at least one characteristic property of the piece of foodstuff may be derivable, the characteristic property of the piece of foodstuff being at least one of the type of food, the age or freshness, the content of fat and whether the food was frozen before or not of the foodstuff. Moreover, said information about the characteristic property of the piece of foodstuff may be provided to a user interface and/or to an information output unit and/or to a control unit for controlling the cooking process.

In a preferred embodiment of the domestic appliance according to the present invention, said domestic appliance comprises a user interface and/or an information output unit and/or a control unit.

In a preferred embodiment of the domestic appliance according to the present invention, particularly where the sensor is for detecting an electrical impedance or at least one component thereof and the at least one parameter is an electrical impedance, the food probe comprises at least one check location or point (or: measuring point, detection point) where the at least one parameter is measured, particularly where the food probe is configured to be insertable into a piece of foodstuff. Accordingly, the at least one parameter, for example a physical property (or: quantity), in particular an electrical impedance or at least one component thereof and/or a temperature, can be determined at the least one check location or point (or: measuring point, detection point) and/or at a plurality of check points can be determined, particularly in a, preferably inner, region of the foodstuff. From said at least one detected parameter and/or physical property, in particular impedance or component thereof and/or temperature, at least one of food type information about the type of food of the foodstuff and food age information about the age of the foodstuff may be determined. From said at least one detected parameter and/or physical property, in particular impedance or component thereof and/or temperature, a bacterial information about the bacterial concentration in the foodstuff or about a reduction in the bacterial concentration in the foodstuff may advantageously be determined by, for example, using either the food type information of the foodstuff or the food age information of the foodstuff or both, food type information and food age information when deriving the bacterial information. Said bacterial information may also be provided to a user interface and/or to an information output unit and/or to a control unit for adapting the cooking time and/or cooking temperature dependent on this bacterial information.

In connection therewith, the term "bacterial information" as used herein, preferably is to be interpreted in a broad sense including any information, such as values, signals, indications, symbols, words or the like, about the bacterial concentration or a reduction thereof directly or information derived or evaluated therefrom. In particular, the term bacterial information also includes information derived from a comparison of a value or signal representing the bacterial concentration or a reduction thereof with at least one pre-given reference value or reference signal, for instance an information about whether the bacterial concentration or a reduction thereof is within a specified safety range or below or above a certain specified safety level, or any other further evaluation of a value or signal for the bacterial concentration or a reduction thereof.

In a preferred embodiment of the domestic appliance according to the present invention a food probe comprises at least one or a plurality of electric voltage(s) (or: electric field(s)) in general having AC components or being an AC voltage, which are to be applied to said piece of foodstuff. Thereby, the impedance or the at least one component thereof in the foodstuff is measured or detected as the at least one parameter. Preferably, at least one food probe is used which is inserted into the foodstuff and comprises at least two electrodes or a plurality of electrode pairs for applying the electric voltage and measuring the impedance or the at least one component thereof. Alternatively, a number of food probes or food probe bodies is used which are inserted into the foodstuff and comprises at least two electrodes in each case for applying the electric voltage and measuring the impedance or the at least one component thereof.

The detection or measurement of the electrical impedance or the at least one component thereof can be made at a single frequency, in particular of the electric field, which in most cases allows for a sufficient distinction between the different food types or food characteristics or properties already.

It is to be understood that in an embodiment such food probe is configured such that when voltages are applied between the first electrodes and the second electrodes in each case, electric fields or voltages are generated or present within the foodstuff in its inner region. Each electric voltage or field extends between and in the environment of the first electrode and the second electrode of the corresponding pair of electrodes and usually at least contains AC components or is an AC voltage.
It is to be understood that in such configuration, preferably, the front portion of the food probe is invaded into the foodstuff in such a way, that at least one of the electric fields is generated within the central portion of the foodstuff.

Preferably, such food probe comprises serially arranged electrodes. Said serially arranged electrodes at the food probe allow the generation of the electrical fields in the core or a central inner region of the foodstuff. Accordingly, an electrical impedance of the foodstuff may be detected in an inner region thereof by applying the electric field between the corresponding electrodes in this region and measuring the impedance or an electrical component thereof between the electrodes.

In a further advantageous embodiment of the domestic appliance according to the present invention, the food probe is configured to be insertable into a piece of foodstuff.

In a further advantageous embodiment of the domestic appliance according to the present invention, the food probe is configured as a probe needle.

A piece of foodstuff as used herein, preferably is a piece of foodstuff to be cooked or stored within the domestic appliance according to the present invention, particularly a piece of meat or a piece of fish, or the like.

In a preferred embodiment, wherein a food probe is configured as a probe needle, such as a spit, this is particularly of advantage if said food probe is configured to be insertable into and/or is to be inserted into a food piece the parameter is to be determined within. For example, a food probe configured as a probe needle may be advantageously inserted into a piece of foodstuff, e.g. a piece of meat, for example within a cooking appliance or a refrigerator.

Where the food probe is configured as a probe needle, the sensor preferably is comprised in the tip or a tip part of the probe needle, wherein said tip may comprise a spike arranged at a front end and/or tip of the probe needle.

It will be immediately understood by a person skilled in the art that, where a food probe is configured to be insertable into a piece of food and/or where a food probe is configured as a probe needle, the food probe is for determining of at least one parameter within said piece of foodstuff. Preferably, an interior space of the domestic appliance is an inner region of said piece of foodstuff, preferably a core region of said piece of foodstuff. Thus, the parameter to be determined, particularly the temperature within the piece of foodstuffcan be determined.

In an alternatively preferred embodiment, the food probe is configured in a flat-shape. Such flat-shape may be advantageously used to determine a parameter, within an area covered by said flat shaped food probe. For example, such flat-shaped food probe may be placed below a good or tray, e.g. a cake or pizza, or baking tray, respectively.

The term "determining the at least one parameter" as used herein preferably also refers to determining a difference of said parameter. For example, if the parameter is temperature such determining also may refer to determining a difference in temperature. Accordingly, also a change of such parameter may be determined.

The term "sensor" as used herein, preferably refers to a converter, capable of measuring the parameter as a physical quantity and, more preferably capable of converting said physical quantity into a signal.

Such signal can, preferably be read by or send to an observer or by an instrument. Such observer or instrument may be directly comprised in the food probe. However, it is also an embodiment of the present invention that the signal is delivered to the domestic appliance, which may comprise such observer or instrument. For example, an oven may comprise a control unit and/or display unit as an observer or instrument and may control a parameter within the interior space of the domestic appliance, e.g. a cavity, by determining the parameter, e.g. the temperature, via the food probe. By way of an example, the food probe needle may be inserted into a piece of meat to be cooked. The temperature being the parameter is determined by the food probe and the respective temperature value is converted into a signal. Said signal is transferred to a display of the domestic appliance, where the temperature is displayed to the user and/or where a control unit is adjustable to stop the cooking process at a certain temperature. Many other types of operations and/or communications between food probes and domestic appliances are known in the art and are to be considered in connection with the present invention.

In addition, various forms of sensors are known which may be advantageously applied within the scope of the present invention. For example, a glass thermometer may be used as food probe, which is capable of converting the measured temperature into expansion and contraction of a liquid, which can be read on a calibrated glass tube. Alternatively, a thermocouple may be advantageously applied, capable of converting temperature to an output voltage, which can be read by a voltmeter.

Additionally or alternatively, a sensor as referred to herein, preferably is a device, which responds to an input quantity by generating a functionally related output usually in the form of an electrical or optical signal. In connection therewith it will be understood that such sensor's sensitivity indicates how much the sensor's output changes when the measured quantity changes.

In connection therewith, it will be immediately understood by a person skilled in the art that sensors that measure very small changes must have very high sensitivities. Sensors also have an impact on what they measure; for instance, a room temperature thermometer inserted into a hot cup of liquid cools the liquid while the liquid heats the thermometer. Sensors and food probes as applied within the scope of the present invention therefore preferably are designed to have a small effect on what is measured.

In a further advantageous embodiment of the domestic appliance according to the present invention the cord is capable of transmitting a signal assigned to the at least one parameter from the domestic appliance to the food probe and/or from the food probe to the domestic appliance.

In accordance therewith, it will be understood that although the food probe is connected to or connectable to the appliance with the cord, said cord may not be used for transmitting signals and/or power. The cord may serve the sole purpose of connecting the food probe to the appliance and securing its proper storage against being mislaid or drop down. It is however preferred that the cord also has a function. Such function may be the transmission of a signal assigned to the at least one parameter from the domestic appliance to the food probe and/or from the food probe to the domestic appliance. For example, a signal referring to the temperature determined by the sensor may be transmitted to the appliance and/or a control unit of the appliance. Accordingly, a cord for transmitting a signal between application and food probe may be also preferably referred to as a signaling line.

In a preferred embodiment, the food probe is independent from an external power transmission, for example comprising a power supply and/or storage unit, e.g. a battery, and/or generating the needed power itself.

In a further preferred embodiment, the food probe is dependent on a supply of power from an external source. In such case the cord may also advantageously be used for power transmission from an external power supply to the food probe, e.g. the power supply may be the or part of the domestic appliance power circuit.

It will be immediately understood that the cord and/or the connection of the cord to the appliance or to the cord pullback mechanism may be configured and chosen dependent on the desired function of the cord. The cord may be thus manufactured from various materials. Preferably, a cord is selected from the group comprising wire, cable, string or line, electrical cord, coaxial cable, rope and flexible tubing.

Were the cord is connected to the food probe with one end, said end preferably is referred to herein as the first end, whereas the opposite end of the cord with which the cord is connected to or connectable to the appliance or parts thereof preferably referred to herein as the second end.

The cord preferably is connected with or connectable with its second end to a connecting point of the appliance or the cord pullback mechanism.

It has to be understood that according to a preferred embodiment, the connecting point where the second end of the cord is connected to or connectable to the appliance is or is part of the cord pullback mechanism.

The connection of the second end of the cord to the appliance or cord pullback mechanism may be configured in various forms. The connection may be permanent and/or non-detachable for the user, or it may be detachable for the user.

It is to be understood that the term "being connectable" as used herein preferably refers to the principle possibility to connect the food probe to the domestic appliance, which, more preferably comprises the possibility that said connection is carried out within the manufacturing process and which is not detachable. For example said connection may be a linkage of the second end of a cord, e.g. being a power line or signal transmitting line, which to structures, preferably electronic structures of the domestic appliance which cannot be detached by a user. However, also a configuration is considered which allows an easy detaching of said connection.

In both cases, such connecting point may be socket, where the second end of the cord preferably comprises a plug, which is to be plugged in said socket. Such connection, for example, the connection of the cord's second end. The connection of such plug and socket allows the food probe to be connected to an external power supply, e.g. the power supply of the domestic appliance. Electrical plugs and sockets may differ in voltage and current rating, shape, size and type of connectors.

Where the second end of the cord is configured as a plug, such plug preferably is a jack plug.

In a preferred embodiment the connection of the food probe and the cord and/or the connection of the cord and the appliance, is easily detachable for cleaning. E.g., a plug-socket connection may be easily detached by pulling out the plug from the socket. This allows, for example to clean the food probe and/or the cord, e.g. in a dishwasher.

However, the connection may also be fixed in a non-detachable manner, i.e. the cord may not be detachable from the connecting point of the appliance. This is of particular advantage if the user is not to be allowed to manipulate or change the configuration or connection of food probe and appliance. Moreover, in such case no particular connection or connector has to be used and the cord may be connected directly to a structure of the domestic appliance, e.g. an electric structure, such as a circuit, preferably said connection being hidden from the users sight and possibility of manipulation.

The domestic appliance preferably is a kitchen appliance, more preferably for heating and/or preparing and/or storing food.

A kitchen appliance as used herein is an oven. An oven preferably is a baking oven.

An interior space of the domestic appliance preferably is a cavity where the main operation of the domestic appliance is carried out, i.e. the cleaning cavity of a dishwasher, or the heating cavity of an oven, or the like. According to the present invention, at least one receiving is provided for storing the food probe.

Such receiving is of particular advantage for properly storing the food probe within or attached to said domestic appliance. Preferably, said receiving is adapted to the shape and dimensions of the food probe. For example, where the food probe is a probe needle, the receiving will be dimensioned accordingly to receive and store the more elongate food probe, whereas a receiving of a plate-shaped flat food probe will be broader. Preferably, a receiving may be configured such that the food probe or at least a substantial part thereof can be stored therein, and/or essentially concealed or hidden therein from the user's sight. Thus, the major part of such food probe may be disappearing in such receiving.

Moreover, such receiving, preferably, comprises at least one opening in order to insert the food probe therein. According to the invention, an elongated receiving leads away from the interior space into the body of the oven. In said body it may be also colder than in the interior space, e.g. an oven muffle. This may be of particular advantage as the food probe is protected from heat if not in use, and particularly if for example a cleaning cycle of high temperature, e.g. a pyrolysis step is to be carried out.

In a preferred embodiment, the receiving comprises a securing means for securing the stored food probe from slipping out of the receiving. Such securing means may be for example a holding clamp or clip mechanism for securing the position of the food probe, or a flap for closing the receiving.

In a further advantageous embodiment of the domestic appliance according to the present invention the receiving comprises a housing, wherein said housing, preferably is manufactured from a material selected from the group comprising metal and plastic, preferably soft plastic.

In such case, the receiving is at least partially screened relative to the inner space of the domestic appliance.

Moreover such housing may have additional functions, e.g. the housing may thermally insulate its interior where the food probe is stored from the outside, e.g. to a baking chamber.

Such housing preferably may be manufactured from a smooth and/or elastic material.

Said housing, preferably is manufactured from a material selected from the group comprising metal and plastic, preferably soft plastic.

Such material is advantageously protecting the food probe from damage such as brakes, and/or have sealing or insulating function.

In a preferred embodiment, a receiving is lined with such housing, e.g. an elastic plastic pocket.

Such housing may comprise a circumferential lip around the opening of the receiving for insertion of the food probe.

In a further advantageous embodiment of the domestic appliance according to the present invention, the receiving is provided at least one corner area of the frame structure, and wherein preferably the frame structure is a front frame structure surrounding a front opening.

It is to be understood that the receiving may be provided in said domestic appliance at various positions. However, it is preferred to choose a position, which allows the user for easy handling and accessing the food probe. However, the position, more preferably, is to be chosen to not interfere with other functions of such appliance, e.g. electrical parts, hinges of doors, sealing, or the like.

Preferably, such receiving is provided at a front or front frame of said domestic appliance. This preferably allows an easy access for the user.

Preferably, the receiving for storing the food probe can be placed in a corner of the front frame. The choice of corner is dependent on the configuration of the appliance. For example, in a domestic appliance having a front door hinged at the right, the receiving may advantageously be positioned at the left, and vice versa, in order to not interfere with door hinges or door opening mechanism. Accordingly, in a domestic appliance having a drop down door, the receiving may be positioned in an upper corner.

It is also considered herein that an appliance may comprise more than one such receiving, e.g. in each corner or edge one, which may be provided during manufacturing of the domestic appliance and the positioning of the housing and cord pullback mechanism may be chosen afterwards according to the wishes of a user, e.g. dependent on the decision where and what kind of door is hinged. The positioning of such receiving may also be chosen dependent on the positioning of the domestic appliance as such, e.g. being a top loader machine, or having a frontal opening, being installed standing on a floor, mounted on a wall and/or on eye level.

Preferably, the receiving is positioned in the corner area of a front frame. Where the domestic appliance is an oven, this front frame is the muffle surrounding and carrying frame. Where the domestic appliance comprises a frontal opening, this front frame preferably surrounds the opening.

In a further advantageous embodiment of the domestic appliance according to the present invention, the cord pullback mechanism is for pulling back the cord and is, preferably selected from the group comprising a cord reel device, a winding-up device or a helically wound wire.

Where the cord pullback mechanism is a helically wound wire it is to be understood that the cord as such is helically wound - at least partially - and thus the helical winding exhibits a force for pulling back the cord.

In an advantageous embodiment of the domestic appliance according to the present invention, the cord pullback mechanism comprises a reel, and, preferably a base.

Preferably, such cord pullback mechanism is for pulling-back, particularly winding the cord, more preferably for storing the cord thereon, and, more particularly additionally for dispensing the cord if needed.

For an easy use, the cord pullback mechanism is preferably configured such that the food probe and, particularly the cord connected to the food probe at its first end can be pulled out.

It will be understood that a co cord pullback mechanism may comprise stationary posts, wherein a cord may be stored manually by winding the cord around said stationary posts, particularly around such stationary posts of a cord reel device. Such stationary posts may be located on the top or exterior of such cord reel device.

Such cord pullback mechanism may be positioned vertically or horizontally oriented. In a further advantageous embodiment of the domestic appliance according to the present invention, the reel is rotatable mounted to the domestic appliance and/or to the base, and wherein the reel is rotatable about an axis of rotation in a first direction and, preferably in a second direction opposite the first direction. According to the invention, the cord pullback mechanism is positioned within the receiving.

In a preferred embodiment, the cord pullback mechanism comprises a reel rotatable about an axis. In accordance therewith, the cord may be wound around said reel. Said reel preferably is mounted on a spindle or pin forming the axis

Such reel preferably comprises a winding surface on which a first cord portion can be wound, which cord portion corresponds to the length of cord that can be extracted from the reel by pulling the food probe and cord.

In a preferred embodiment, the cord is fastened locally to the reel and at its second end being connected or connectable to a stationary element of the appliance. However it is also considered, that the second end of the cord is connected or connectable to the cord reel device, which as such is configured to transmit power and/or signal to and/or from the appliance. For example, the reel or the cord pullback mechanism or parts thereof may be made of conductive material.

Where a reel is configured to rotate in a first direction and in a second direction opposite the first direction, it is immediately understood that this advantageously allows to wind the cord around the reel in one direction for winding and to dispense the cord by rotation in the other second direction. It is, however also to be understood that rotation in only one single direction is sufficient to at first wind up the cord around the reel and afterwards to unwind, i.e. dispense the cord from the reel.

In a further advantageous embodiment of the domestic appliance according to the present invention, the cord pullback mechanism comprises an operation mechanism capable of applying a winding force to the cord pullback mechanism, particularly a cord reel device, preferably to the reel.

Such operation mechanism advantageously facilitates the storing of the cord by winding the cord around the reel and/or facilitates the dispensing of the cord by unwinding. For example, the cord pullback mechanism may comprise a crank or crank handle as an operation mechanism the operation thereof causing the rotational movement of the reel around its axis and thus a storing, i.e. winding, or dispensing of the cord.

The presence of a non-manual operation mechanism, however, is preferred over a manual operating mechanism such as a crank.

In a further advantageous embodiment of the domestic appliance according to the present invention, the cord pullback mechanism comprises a return module.

Such return module advantageously and automatically urges the reel to rotate in a direction, preferably the first direction, which causes a winding up of the cord, preferably, in a direction in which the first cord portion is wound.

Such return module may be disposed in a recess at the periphery of the reel.

In connection therewith, it has to be understood that from a position where the cord is wound around the reel and stored in the cord reel device, the user manually may pull the food probe and the cord causing a first rotational movement of the reel around its axis and a dispensing of the cord. This allows the user to use the food probe and place the food probe for its intended use, e.g. inserting the food probe into a foodstuff. After use of the food probe, the return module is operated causing a further rotational movement of the reel around its axis in the same or the opposite direction as the first rotational movement and thus the cord is rewound and the food probe and the cord is brought back into its storing position.

In a further advantageous embodiment of the domestic appliance according to the present invention the cord pullback mechanism, preferably an operation mechanism and/or a return module, comprises at least one spring element, wherein, more preferably, at least one spring element is capable of applying a winding force to the reel.

Such spring element is advantageously used, preferably in connection with or as part of a return module. Such spring element may cause a winding force to the reel and cause a rotational movement of the reel around its axis and thus an up-winding or dispensing of the cord.

In a further advantageous embodiment of the domestic appliance according to the present invention, the spring element is a torsion spring.

Such torsion spring, preferably is a helical wound spring that is rewound in the opposite sense when the cord is dispensed from the rotatable reel. The spring element preferably causes a winding force to the reel and acts to rewind the cord, which is dispensed from the cord reel device.

In a further advantageous embodiment of the domestic appliance according to the present invention, the cord pullback mechanism comprises a brake element.

Preferably, such brake element prevents the reel from a rotational movement and, thus the cord from being further dispensed or wound at a certain length or position of the cord.

Preferably, a brake element comprises at least one cog that meshes with a toothed wheel that is constrained to rotate with the reel.

In a further advantageous embodiment of the domestic appliance according to the present invention, the domestic appliance comprises at least one cord guiding for guiding the cord and/or at least one cord receiving for mounting the cord.
Such cord guiding and/or cord receiving allows to advantageously guide and/or store the cord or parts thereof while the food probe is in use. If, for example, the cord is dispensed from the cord pullback mechanism and the food probe is in its operating position, e.g. inserted into a food piece, the cord can advantageously be mounted or attached to said cord guiding and/or cord receiving.

Preferably, such cord guiding and/or cord receiving may be provided alongside a frame structure and/or a cavity opening.

Such cord guiding and/or cord receiving may be configured in various ways, e.g. as clamps or hooks.

All described embodiments of the invention have the advantage that a domestic appliance comprising a food probe being connected or connectable to the appliance is provided, which allows for a secure and easy to handle way of storing the food probe and a cord, which connects the food probe with the appliance. Moreover, with the domestic appliance according to the present invention such cord connecting or capable of connecting a food probe with the domestic appliance and the food probe as such may be stored directly at or within the appliance. Accordingly, a place for storing such food probe and cord is assigned, which secures the food probe from being mislaid or damaged due to wrong storage. Both, the food probe and the cord are thus - if not in use - stored in a safe and proper manner, at an assigned place, i.e. directly at or in the domestic appliance, being easy accessible for the user if needed.

The present invention will be described in further detail with reference to the drawings from which further features, embodiments and advantages may be taken, and in which
- FIG 1: illustrates a perspective partial view of a domestic appliance showing a first inventive embodiment, wherein the cord pullback mechanism is in a first operating state;
- FIG 2: illustrates a perspective partial view of a domestic appliance showing the first inventive embodiment, wherein the cord pullback mechanism is in a second operating state;

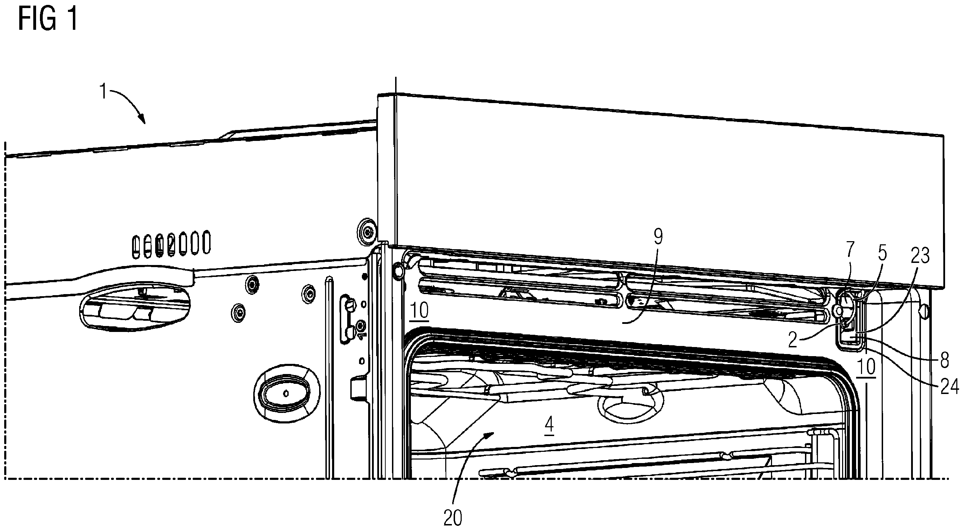

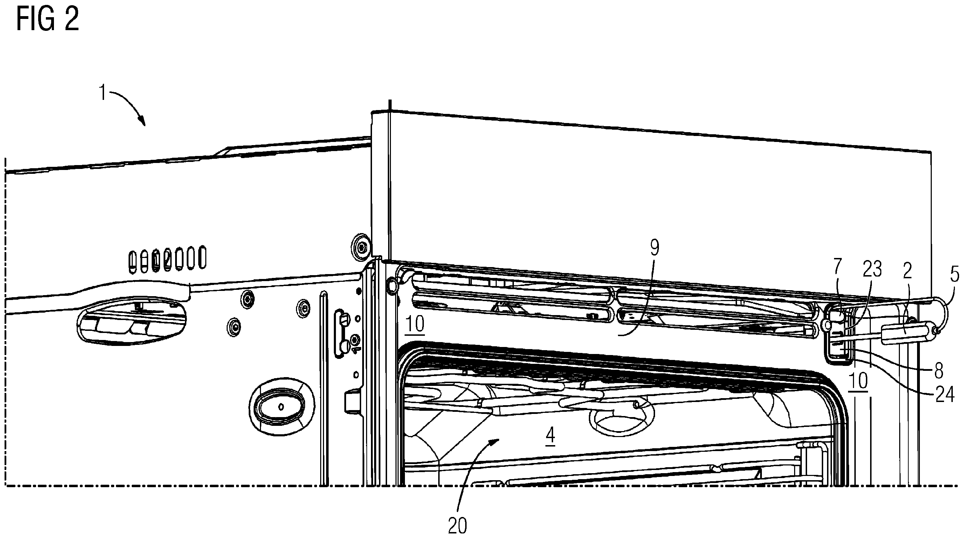

FIGS 1 and 2 show perspective partial views of a domestic appliance 1 according to the present invention.

In FIG 1 and in FIG 2 the domestic appliance 1 is a baking oven which comprises a temperature food probe 2 and a cord pullback mechanism, wherein the temperature food probe 2 is for determining the temperature within the oven cavity 4 of the baking oven 1, and wherein the temperature food probe 2 is connectable to the baking oven 1 by a cord 5, and wherein the cord pullback mechanism is for winding and dispensing the cord 5.

In particular, FIG 1 shows a perspective partial view of the baking oven 1 in a stage where a signaling wire 5 capable of transmitting a signal assigned to the temperature from the temperature food probe 2 to the baking oven 1 is wound up and the temperature food probe 2 is stored and not in use, whereas in FIG 2 the baking oven 1 shown in FIG 1 is shown in a stage where the temperature food probe 2 is to be inserted into its storage position after being used and wherein the cord 5 is at least partially dispensed. Here the cord 5 also connects the food probe 2 to the power circuit of the oven 1 and thus the food probe 2 is supplied with sufficient power for its intended use. With the baking oven 1 according to the present invention a cord 5 connecting or capable of connecting a temperature food probe 2 with the baking oven 1 and the temperature food probe 2 may be stored directly at or within the baking oven 1. Accordingly, a place for storing such temperature food probe 2 and cord 5 is assigned, which secures the temperature food probe 2 from being mislaid. Moreover, the baking oven 1 according to the present invention provides an easy to handle way of storing such temperature food probe 2 and the connected cord 5. Advantageously, the cord 5 is connecting the temperature food probe 2 with the appliance and thus, the temperature food probe 2 is prevented from being mislaid and, more importantly from falling accidently down. It will also be immediately understood that the constraints of the prior art according to which the cord 5 may be tangled or knotted or damaged in a drawer upon storage are overcome in that the cord 5 is advantageously properly stored on or in the cord pullback mechanism if not in use and may be dispensed therefrom if needed.

Both, the temperature food probe 2 and the cord 5 are thus - if not in use - stored in a safe and proper manner, at an assigned place, i.e. directly at or in the baking oven 1, being easy accessible for the user if needed.

In the shown embodiment the temperature food probe 2 is configured as a food probe needle, which comprises a temperature sensor for determining the temperature, or temperature changes within the cavity 4 of the baking oven 1, wherein the sensor is comprised in the tip or a tip part of the temperature food probe needle 2.

Such food temperature food probe 2 configured as a temperature food probe needle may be advantageously inserted into a piece of foodstuff 22, e.g. a piece of meat.

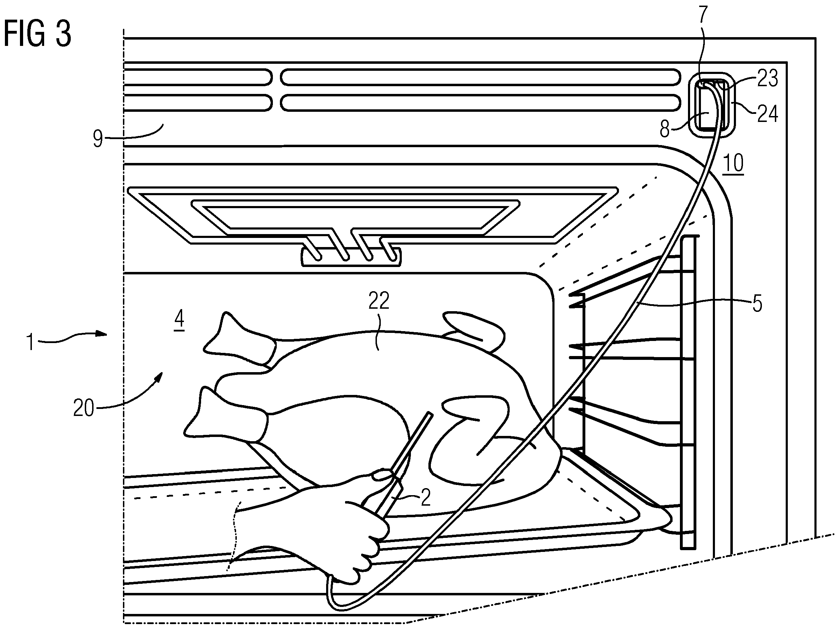

Here a signal reflecting the determined temperature is delivered to the oven 1, which comprises an observer or instrument, more particularly a control unit and/or a display unit for controlling and/or displaying the temperature within the cavity 4 of the oven 1. As may be taken from FIG 3 the food probe needle 2 is inserted into a piece of meat 22 to be cooked. The temperature is determined by the temperature food probe 2 and the respective temperature value is converted into a signal. Said signal is transferred to a display of the oven 1, where the temperature is displayed to the user and where a control unit is adjustable to stop the cooking process at a certain temperature. Here the cord 5 is connected to the temperature food probe 2 with one end, said end referred to herein as the first end, whereas the opposite end of the cord 5 with which the cord is connected to or connectable to a connecting point at the oven 1 and which is referred to herein as the second end.

As may be best seen from FIG 2 the baking oven 1 according to the present invention comprises a receiving 7 for storing the temperature food probe 2, wherein said receiving 7 comprises an opening 23 in order to insert the temperature food probe 2 therein. Here the receiving 7 is formed as an elongated pocket dimensioned to receive the elongated needle-shaped food food probe 2 and positioned in a front frame structure 9 of the baking oven 1, more particularly in the upper right corner area 10 of the front frame structure 9, wherein the frame structure 9 is surrounding the front opening 20 of the cavity 4.

The receiving 7 is lined with a housing 8 manufactured from soft plastic material which thermally insulates the interior of the receiving 7 where the temperature food probe 2 is stored from the outside, e.g. to the cavity 4 of the oven 1. Here the housing 8 comprises a circumferential lip 24 around the opening 23 of the receiving 7.

A cord pullback mechanism may be positioned within the receiving 7. Said cord pullback mechanism, for example, comprises a reel for winding the cord 5 and storing the cord 5 thereon if the food probe is not needed, and, additionally, for dispensing the cord 5 if the food probe 2 is needed. Therefore, the reel may be mounted rotatable about an axis of rotation, within the cord pullback mechanism to the baking oven 1. More particularly, the cord 5 can be wound around a winding surface of said reel, said reel mounted on a spindle or pin forming the axis. For an easy use the cord pullback mechanism can thus be configured such that the cord 5 connected to the temperature food probe 2 can be pulled out at its first end, i.e. where temperature food probe 2 is connected to the cord 5, by pulling the food probe 2.

Here the cord 5 is fastened locally to the reel and at its second end is connected to the electrics of the oven 1.

The cord pullback mechanism may comprise an operation mechanism capable of applying a winding force to the cord pullback mechanism, and a pullback module disposed in a recess at the periphery of the reel for an automatic winding of the cord 5 and pulling back the cord 5 into the stored and winded position, more specifically to the reel. More precisely, such operation mechanism advantageously facilitates the storing of the cord by winding the cord around the reel and/or facilitates the dispensing of the cord by unwinding.

The pullback module advantageously and automatically urges the reel to rotate in a direction, preferably the first direction, which causes a winding up of the cord 5.

In connection therewith, it has to be understood that from a position where the cord 5 is wound around the reel 11 and stored in the cord pullback mechanism, the user manually may pull the temperature food probe 2 and the cord 5 causing a first rotational movement of the reel around its axis and a dispensing of the cord 5. This allows the user to use the temperature food probe 2 and place the temperature food probe 2 for its intended use, e.g. inserting the temperature food probe 2 into a foodstuff 22. After use of the temperature food probe 2, the pullback module is operated causing a further rotational movement of the reel around its axis in the same or the opposite direction as the first rotational movement and thus the cord 5 is rewound and the temperature food probe 2 and the cord 5 is brought back into its storing position.

Here the cord pullback mechanism, more particularly the return module, comprises a torsion spring which is capable of applying a winding force to the reel and causes a rotational movement of the reel around its axis and thus an up-winding of the cord 5.

The torsion spring is a helical wound spring that is rewound in the opposite sense when the cord 5 is dispensed from the rotatable reel. The torsion spring causes a winding force to the reel and acts to rewind the cord 5, which is dispensed from the cord pullback mechanism. Here the cord pullback mechanism also comprises a brake element, which may prevent the reel from a rotational movement, and, thus the cord 5 from being further dispensed or wound at a certain length or position of the cord 5. Said brake element comprises at least one cog that meshes with a toothed wheel that is constrained to rotate with the reel. Here the brake element is configured such that after pulling the cord 5 out of its resting position, i.e. dispensing the cord 5 from the cord pullback mechanism to the desired length a release of the pulling force causes the brake element to block a further automatic winding of the cord 5 around the reel usually forced by the torsion spring. A further short pull of the cord 5, however, releases blocking of the break element and a further winding of the cord 5 back into the full wind resting position is possible.

The features of the present invention disclosed in the specification, the claims, and/or the figures may both separately and in any combination thereof be material for realizing the invention in various forms thereof.

### List of reference numerals

- 1: domestic appliance
- 2: probe

- 4: interior space
- 5: cord

- 7: receiving
- 8: housing
- 9: frame structure
- 10: corner area

- 20: opening of cavity

- 22: piece of foodstuff,
- 23: opening of receiving
- 24: circumferential lip

## Claims

1. A domestic appliance (1), wherein said domestic appliance is an oven, comprising a food probe (2) for determining of at least one parameter within an interior space (4) of the domestic appliance (1), wherein the food probe (2) is connectable to the domestic appliance (1) by a cord (5), **characterized in that**
the domestic appliance (1) comprises a cord pullback mechanism, wherein the cord pullback mechanism is for winding and dispensing the cord (5), and wherein the cord pullback mechanism is positioned within a receiving (7), and wherein the receiving (7) is provided in a frame structure (9) of the domestic appliance (1), and wherein the frame structure (9) is a frame structure (9) surrounding an opening (20) of the interior space (4) of the domestic appliance (1).

2. The domestic appliance (1) according to claim 1, wherein the food probe (2) comprises a sensor for determining the at least one parameter, preferably within the interior space (4) of the domestic appliance (1), and wherein more preferably, said sensor is a temperature sensor and the at least one parameter is a temperature, and/or the sensor is a humidity sensor and the at least one parameter is a humidity, and/or the sensor is for detecting an electrical impedance or at least one component thereof and the at least one parameter is an electrical impedance.

3. The domestic appliance (1) according to any one of claims 1 to 2, wherein the food probe (2) is configured to be insertable into a piece of foodstuff (22), more preferably the food probe (2) is configured as a probe needle, and/or wherein the food probe (2) is for determining of the at least one parameter within an inner region of the piece of foodstuff (22), preferably within a core region of the piece of foodstuff (22).

4. The domestic appliance (1) according to any one of claims 1 to 3, wherein the cord (5) is capable of transmitting a signal assigned to the at least one parameter from the domestic appliance (1) to the food probe (2) and/or from the food probe (2) to the domestic appliance (1).

5. The domestic appliance (1) according to any one of claims 1 to 4, wherein the receiving (7) is provided for storing the food probe (2).

6. The domestic appliance (1) according to claim 5, wherein the receiving (7) comprises a housing (8), wherein said housing (8), preferably is manufactured from a material selected from the group comprising metal and plastic, preferably soft plastic.

7. The domestic appliance (1) according to any one of claims 1 to 6, wherein the receiving (7) is provided in at least one corner area (10) of the frame structure (9), and wherein preferably the frame structure (9) is a front frame structure (9) surrounding a front opening (20).

8. The domestic appliance (1) according to any one of claims 1 to 7, wherein the cord pullback mechanism is for pulling back the cord and preferably is selected from the group comprising a cord reel mechanism, a winding-up mechanism or a helically wound wire.

9. The domestic appliance (1) according to claim 8, wherein a reel is rotatable mounted to the domestic appliance (1) and/or to a base, and wherein the reel is rotatable about an axis of rotation in a first direction and, preferably in a second direction opposite the first direction.

10. The domestic appliance (1) according to any one of claims 1 to 9, wherein the cord pullback mechanism comprises an operation mechanism capable of applying a winding force to the cord pullback mechanism, preferably to the reel.

11. The domestic appliance (1) according to any one of claims 1 to 10, wherein the cord pullback mechanism comprises a return module.

12. The domestic appliance (1) according to any one of claims 1 to 11, wherein the cord pullback mechanism, preferably an operation mechanism (14) and/or a return module, comprises at least one spring element, wherein, more preferably, at least one spring element is capable of applying a winding force to the reel.

13. The domestic appliance (1) according to claim 12, wherein the spring element is a torsion spring.

14. The domestic appliance (1) according to any one of claims 1 to 13, wherein the cord pullback mechanism comprises a brake element.

15. The domestic appliance (1) according to any one of claims 1 to 14, wherein the domestic appliance (1) comprises at least one cord guiding for guiding the cord (5) and/or at least one cord receiving for mounting the cord (5).

## Patentansprüche

1. Haushaltsgerät (1), wobei das Haushaltsgerät ein Ofen ist, aufweisend eine Nahrungssonde (2) zum Ermitteln mindestens eines Parameters innerhalb eines Innenraums (4) des Haushaltsgeräts (1), wobei die Nahrungssonde (2) durch ein Kabel (5) mit dem Haushaltsgerät (1) verbunden werden kann, **dadurch gekennzeichnet, dass**
das Haushaltsgerät (1) einen Kabeleinzugsmechanismus aufweist, wobei der Kabeleinzugsmechanismus zum Aufwickeln und Ausgeben des Kabels (5) dient und wobei der Kabeleinzugsmechanismus innerhalb einer Aufnahme (7) positioniert ist und wobei die Aufnahme (7) in einer Rahmenstruktur (9) des Haushaltsgeräts (1) bereitgestellt ist und wobei die Rahmenstruktur (9) eine Rahmenstruktur (9) ist, die eine Öffnung (20) des Innenraums (4) des Haushaltsgeräts (1) umgibt.

2. Haushaltsgerät (1) nach Anspruch 1, wobei die Nahrungssonde (2) einen Sensor zum Ermitteln des mindestens einen Parameters aufweist, bevorzugt innerhalb des Innenraums (4) des Haushaltsgeräts (1), und wobei bevorzugter der Sensor ein Temperatursensor ist und der mindestens eine Parameter eine Temperatur ist und/oder der Sensor ein Feuchtigkeitssensor ist und der mindestens eine Parameter eine Feuchtigkeit ist und/oder der Sensor zum Erfassen einer elektrischen Impedanz oder mindestens einer Komponente davon dient und der mindestens eine Parameter eine elektrische Impedanz ist.

3. Haushaltsgerät (1) nach einem der Ansprüche 1 bis 2, wobei die Nahrungssonde (2) konfiguriert ist, in ein Stück Nahrungsmittel (22) eingefügt werden zu können, bevorzugter die Nahrungssonde (2) als eine Sondennadel konfiguriert ist, und/oder wobei die Nahrungssonde (2) zum Ermitteln des mindestens einen Parameters innerhalb eines Innenbereichs des Stücks von Nahrungsmittel (22) dient, bevorzugt innerhalb eines Kernbereichs des Stücks von Nahrungsmittel (22).

4. Haushaltsgerät (1) nach einem der Ansprüche 1 bis 3, wobei das Kabel (5) zum Übertragen eines Signals, das dem mindestens einen Parameter zugewiesen ist, vom Haushaltsgerät (1) an die Nahrungssonde (2) und/oder von der Nahrungssonde (2) an das Haushaltsgerät (1) fähig ist.

5. Haushaltsgerät (1) nach einem der Ansprüche 1 bis 4, wobei die Aufnahme (7) zum Aufbewahren der Nahrungssonde (2) bereitgestellt ist.

6. Haushaltsgerät (1) nach Anspruch 5, wobei die Aufnahme (7) ein Gehäuse (8) aufweist, wobei das Gehäuse (8) bevorzugt aus einem Material gefertigt ist, ausgewählt aus der Gruppe, aufweisend Metall und Kunststoff, bevorzugt weichen Kunststoff.

7. Haushaltsgerät (1) nach einem der Ansprüche 1 bis 6, wobei die Aufnahme (7) in mindestens einem Eckgebiet (10) der Rahmenstruktur (9) bereitgestellt ist und wobei bevorzugt die Rahmenstruktur (9) eine Vorderrahmenstruktur (9) ist, die eine Vorderöffnung (20) umgibt.

8. Haushaltsgerät (1) nach einem der Ansprüche 1 bis 7, wobei der Kabeleinzugsmechanismus zum Einziehen des Kabels dient und bevorzugt aus der Gruppe ausgewählt ist, aufweisend einen Kabelspulmechanismus, einen Aufwickelmechanismus oder einen spiralförmig aufgewickelten Draht.

9. Haushaltsgerät (1) nach Anspruch 8, wobei eine Winde drehbar am Haushaltsgerät (1) und/oder an einer Basis montiert ist, wobei die Winde in einer ersten Richtung um eine Drehachse drehbar ist und bevorzugt in einer zweiten Richtung entgegen der ersten Richtung.

10. Haushaltsgerät (1) nach einem der Ansprüche 1 bis 9, wobei der Kabeleinzugsmechanismus einen Betriebsmechanismus aufweist, der fähig ist, eine Wickelkraft am Kabeleinzugsmechanismus aufzubringen, bevorzugt an der Winde.

11. Haushaltsgerät (1) nach einem der Ansprüche 1 bis 10, wobei der Kabeleinzugsmechanismus ein Rückführmodul aufweist.

12. Haushaltsgerät (1) nach einem der Ansprüche 1 bis 11, wobei der Kabeleinzugsmechanismus, bevorzugt ein Betriebsmechanismus und/oder ein Rückführmodul, mindestens ein Federelement aufweist, wobei bevorzugter mindestens ein Federelement fähig ist, eine Wickelkraft an der Winde aufzubringen.

13. Haushaltsgerät (1) nach Anspruch 12, wobei das Federelement eine Torsionsfeder ist.

14. Haushaltsgerät (1) nach einem der Ansprüche 1 bis 13, wobei der Kabeleinzugsmechanismus ein Bremselement aufweist.

15. Haushaltsgerät (1) nach einem der Ansprüche 1 bis 14, wobei das Haushaltsgerät (1) mindestens eine Kabelführung zum Führen des Kabels (5) und/oder mindestens eine Kabelaufnahme zum Befestigen des Kabels (5) aufweist.

## Revendications

1. Appareil domestique (1), dans lequel ledit appareil domestique est un four, comprenant une sonde pour aliments (2) pour déterminer au moins un paramètre au sein d'un espace intérieur (4) de l'appareil domestique (1), dans lequel la sonde pour aliments (2) peut être connectée à l'appareil domestique (1) par un cordon (5),
**caractérisé en ce que**
l'appareil domestique (1) comprend un mécanisme de retour de cordon, dans lequel le mécanisme de retour de cordon est destiné à enrouler et dispenser le cordon (5), et dans lequel le mécanisme de retour de cordon est positionné au sein d'une réception (7), et dans lequel la réception (7) est ménagée dans une structure de cadre (9) de l'appareil domestique (1), et dans lequel la structure de cadre (9) est une structure de cadre (9) entourant une ouverture (20) de l'espace intérieur (4) de l'appareil domestique (1).

2. Appareil domestique (1) selon la revendication 1, dans lequel la sonde pour aliments (2) comprend un capteur pour déterminer l'au moins un paramètre, de préférence au sein de l'espace intérieur (4) de l'appareil domestique (1), et dans lequel de manière davantage préférée ledit capteur est un capteur de température et l'au moins un paramètre est une température, et/ou le capteur est un capteur d'humidité et l'au moins un paramètre est une humidité, et/ou le capteur est destiné à détecter une impédance électrique ou au moins une composante de celle-ci et l'au moins un paramètre est une impédance électrique.

3. Appareil domestique (1) selon l'une quelconque des revendications 1 et 2, dans lequel la sonde pour aliments (2) est configurée pour pouvoir être insérée dans une denrée alimentaire (22), de manière davantage préférée la sonde pour aliments (2) est configurée comme une aiguille de sonde, et/ou dans lequel la sonde pour aliments (2) est destinée à déterminer l'au moins un paramètre au sein d'une région interne de la denrée alimentaire (22), de préférence au sein d'une région de coeur de la denrée alimentaire (22).

4. Appareil domestique (1) selon l'une quelconque des revendications 1 à 3, dans lequel le cordon (5) est capable de transmettre un signal attribué à l'au moins un paramètre depuis l'appareil domestique (1) à la sonde pour aliments (2) et/ou depuis la sonde pour aliments (2) à l'appareil domestique (1).

5. Appareil domestique (1) selon l'une quelconque des revendications 1 à 4, dans lequel la réception (7) est ménagée pour stocker la sonde pour aliments (2).

6. Appareil domestique (1) selon la revendication 5, dans lequel la réception (7) comprend un logement (8), dans lequel ledit logement (8), de préférence est fabriqué à partir d'un matériau choisi dans le groupe comprenant un métal et un plastique, de préférence un plastique mou.

7. Appareil domestique (1) selon l'une quelconque des revendications 1 à 6, dans lequel la réception (7) est ménagée dans au moins une zone de coin (10) de la structure de cadre (9), et dans lequel de préférence la structure de cadre (9) est une structure de cadre avant (9) entourant une ouverture avant (20).

8. Appareil domestique (1) selon l'une quelconque des revendications 1 à 7, dans lequel le mécanisme de retour de cordon est destiné à renvoyer le cordon et est de préférence choisi dans le groupe comprenant un mécanisme de bobine de cordon, un mécanisme d'enroulement ou un fil enroulé hélicoïdalement.

9. Appareil domestique (1) selon la revendication 8, dans lequel une bobine peut être montée en rotation sur l'appareil domestique (1) et/ou sur une base, et dans lequel la bobine peut être mise en rotation autour d'un axe de rotation dans une première direction et, de préférence, dans une seconde direction opposée à la première direction.

10. Appareil domestique (1) selon l'une quelconque des revendications 1 à 9, dans lequel le mécanisme de retour de cordon comprend un mécanisme d'exploitation capable d'appliquer une force d'enroulement au mécanisme de retour de cordon, de préférence à la bobine.

11. Appareil domestique (1) selon l'une quelconque des revendications 1 à 10, dans lequel le mécanisme de retour de cordon comprend un module de renvoi.

12. Appareil domestique (1) selon l'une quelconque des revendications 1 à 11, dans lequel le mécanisme de retour de cordon, de préférence un mécanisme d'exploitation et/ou un module de renvoi comprend au moins un élément de ressort dans lequel, de manière davantage préférée, au moins un élément de ressort est capable d'appliquer une force d'enroulement à la bobine.

13. Appareil domestique (1) selon la revendication 12, dans lequel l'élément de ressort est un ressort de torsion.

14. Appareil domestique (1) selon l'une quelconque des revendications 1 à 13, dans lequel le mécanisme de retour de cordon comprend un élément de frein.

15. Appareil domestique (1) selon l'une quelconque des revendications 1 à 14, dans lequel l'appareil domestique (1) comprend au moins un guidage de cordon pour guider le cordon (5) et/ou au moins une réception de cordon pour monter le cordon (5).
